# EUROPÄISCHE PATENTSCHRIFT

(11) **EP 2 643 688 B1**
(45) Veröffentlichungstag und Bekanntmachung des Hinweises auf die Patenterteilung: **01.01.2020**
(21) Anmeldenummer: 11822888.1
(22) Anmeldetag: 23.11.2011
(51) Int. Cl.: G01N 31/12

(54) **VORRICHTUNG UND VERFAHREN ZUR VERBRENNUNGSANALYSE MITTELS INDUKTIONSÖFEN**
DEVICE AND METHOD FOR COMBUSTION ANALYSIS BY MEANS OF INDUCTION FURNACES
DISPOSITIF ET PROCÉDÉ D'ANALYSE DE COMBUSTION AU MOYEN DE FOURS À INDUCTION

(30) Priorität: 23.11.2010 DE 102010060723; 26.01.2011 DE 102011000329
(43) Veröffentlichungstag der Anmeldung: 02.10.2013
(73) Patentinhaber: Bruker AXS GmbH, 76187 Karlsruhe (DE)
(72) Erfinder: STEUDE, Martin, 47475 Kamp-Lintfort (DE); CAMPS, Christian, 47929 Grefrath (DE)
(74) Vertreter: Kreutzer, Ulrich
(86) Internationale Anmeldenummer: PCT/DE2011/075286
(87) Internationale Veröffentlichungsnummer: WO 2012/097784

(56) Entgegenhaltungen:
- WO-A1-83/04310
- US-A- 2 332 943
- US-A- 2 932 558
- US-A- 3 148 032
- US-A- 4 784 833

## Beschreibung

### TECHNISCHES GEBIET DER ERFINDUNG

Die Erfindung betrifft eine Vorrichtung und ein Verfahren zur Verbrennungsanalyse mittels Induktionsöfen, wobei eine Probe, insbesondere eine anorganische Probe, in einem Induktionsofen verbrannt und die bei der Verbrennung entstehenden Gase analysiert werden. Die Erfindung betrifft zudem ein Schutzelement zur Nachrüstung bzw. Umrüstung von Induktionsöfen für die Verbrennungsanalyse.

### HINTERGRUND DER ERFINDUNG

Zur Ermittlung der Zusammensetzung anorganischer Proben durch Verbrennung, insbesondere der Zusammensetzung von Materialien wie z.B. Stahl, Eisen, Nichteisenmetallen, Aluminium, Titan, Zirkon, Erzen und Legierungen der vorgenannten Stoffe, keramischen Werkstoffen, Zement, Kalk und dgl., sind verschiedene Verfahren und Vorrichtungen bekannt, bei denen jeweils eine Probe in einem Induktionsofen verbrannt und die Verbrennungsgase automatisch mittels entsprechender Detektoren analysiert werden.

Neben der schnellen (weniger als etwa 1 bis 2 Minuten dauernden) Verbrennung von Proben durch induktives Erwärmen der Probe sind auch, z.B. aus den Druckschriften US 2,932,558 A, US 2008/0026471 A1 und US 4,213,763, Vorrichtungen und Verfahren bekannt, bei denen die zu analysierenden Proben in beheizten Öfen, bei denen die Ofenkammer selbst z.B. durch Widerstandsheizdrähte erwärmt wird, relativ langsam, nämlich mit Aufheizraten von etwa 25 - 50 °C pro Minute, auf Temperaturen im Bereich von etwa 600 - 850 °C erhitzt werden, wobei dann Gase über einen entsprechend langen Zeitraum aufgefangen und analysiert werden müssen. Dazu umfasst zum Beispiel die aus der genannten US 2,932,558 A bekannte Vorrichtung einen Induktionsofen mit einer Ofenkammer, in der im Betrieb Trägergas über wenigstens einen Gaseinlass zu einem Gasauslass strömt und in der eine zu analysierende Probe in einem Probenbehälter angeordnet und verbrannt werden kann, wobei ein hohles Schutzelement vorgesehen und im bestimmungsgemäßen Betriebszustand der Vorrichtung in der Ofenkammer unmittelbar über der Probe derart angeordnet ist, dass das der Probe zugewandte Ende des Schutzelementes zusammen mit dem Probenbehälter eine Verengung für den Trägergasstrom bildet, wobei das Schutzelement zur Leitung von bei der Verbrennung der Probe entstehenden Gasen durch das Schutzelement zu dem Gasauslass ausgebildet ist. Das Schutzelement soll dabei verhindern, dass Sauerstoff ungehindert zur Probe strömen kann, damit die Probe möglichst langsam verbrennt. Bei dieser langsamen Erhitzung treten zwar bestimmte Probleme, wie insbesondere das nachfolgend beschriebene Verschmutzen der Ofenkammer durch Probenmaterial und einen üblicherweise dem Probenmaterial hinzugegebenen Reaktionsbeschleuniger, die bei der plötzlichen Erhitzung aufkochen und aus einem Probentiegel herausspritzen, gar nicht oder nicht in wesentlichem Maße auf, jedoch sind diese Vorrichtungen und Verfahren nicht zur schnellen Probenanalyse geeignet.

Bei Vorrichtungen und Verfahren der hier in Frage stehenden Art wird die zur Verbrennung der Probe benötigte Wärme durch elektromagnetische Induktion erzeugt. Die Probe wird dazu in einer abdichtbaren, mit Gasein- und -auslässen versehenen inneren, nachfolgend Ofenkammer genannten Kammer eines Induktionsofens angeordnet, wobei dann in der Offenkammer durch i.d.R. außerhalb der Ofenkammer vorgesehene Mittel ein elektromagnetisches Hochfrequenzfeld zur Induktion von Wirbelströmen erzeugt wird.

Um über einen kurzen Zeitraum möglichst hoch konzentrierte Verbrennungsgase zu erhalten, die von entsprechenden Detektoren besser verwertet werden können als Gase niedriger Konzentration, und aus wirtschaftlichen Gründen, sollen die Proben möglichst schnell verbrennen. Den Proben werden daher in der Regel sog. Reaktionsbeschleuniger zugegeben, die eine gute Ankopplung an das Hochfrequenzfeld besitzen und damit für eine schnelle Erhitzung der Probe sorgen.

Um die Verbrennung weiter zu begünstigen, werden die Proben bei den bekannten Vorrichtungen über eine über der zu verbrennenden Probe angeordnete Lanze mit Sauerstoff angeblasen. Der mit gewissem Überdruck in die abgedichtete Ofenkammer geblasene Sauerstoff dient dann vorteilhaft gleichzeitig auch als Trägergas, um die Verbrennungsgase über einen Gasauslass aus der Ofenkammer zu den jeweiligen Detektoren zu transportieren. Dabei ist üblicherweise vorgesehen, den Sauerstoff nicht nur über die Lanze, sondern auch über weitere, im oberen und im unteren Bereich der Ofenkammer vorgesehen Gaseinlässe zuzuführen, und zwar derart, dass sich ein Netto-Gasstrom nach oben ergibt, wo ein Gasauslass angeordnet ist, der mit einer Probenleitung zum Transport der Gase aus der Ofenkammer zu entsprechenden Detektoren verbunden ist.

Ein großes Problem bei den bekannten Vorrichtungen stellen die bei der Verbrennung auftretenden Materialspritzer dar. Die Proben werden i.d.R. in einem offenen Keramiktiegel in die Ofenkammer gestellt und kochen während der Analyse auf, wobei Probenmaterial und Reaktionsbeschleuniger aus dem Tiegel spritzen und die Ofenkammer, die in der Regel von einem Quarzglasrohr gebildet wird, verschmutzen. Die bei den bekannten Vorrichtungen vorgesehene direkte Anströmung der Probe mit Sauerstoff über eine Lanze verstärkt das Problem noch. Bei nachfolgenden Verbrennungsanalysen werden die Spritzer wieder zum Schmelzen gebracht, können sich in die Wände der Ofenkammer und insbesondere eines die Ofenkammer bildenden Quarzglasrohres einbrennen und/oder die Meßergebnisse verfälschen. Eingebrannte Spitzer führen nach kurzer Zeit zur Zerstörung des Quarzglasrohres.

Um zu verhindern, dass die Spritzer die in der jeweiligen Ofenkammer vorhandenen Gasein- und -auslässe zusetzen, werden die Gasein- und -auslässe bei den bekannten Verbrennungsöfen mit Ausnahme der unmittelbar über die Probe angeordneten Lanze möglichst weit entfernt von der Probe selbst in der jeweiligen Ofenkammer angeordnet: Dies führt allerdings dazu, dass die Ofenkammern bei den bekannten Verbrennungsöfen relativ großvolumig sind, was eine ganze Reihe von Nachteilen mit sich bringt. So diffundieren bei den bekannten Vorrichtungen die Verbrennungsgase zunächst in der gesamten Ofenkammer und mischen sich mit dem als Trägergas zugeleiteten Sauerstoff, bevor sie zum Gasauslass gelangen, so dass die Konzentration der Verbrennungsgase niedrig ist und nur ein Teil des zur Verfügung stehenden Sauerstoffs mit der Probe in Berührung kommt.

Das Volumen der Ofenkammer beeinflußt auch die Dauer eines Meßzyklus, da einerseits sichergestellt sein soll, dass möglichst die gesamte Menge an Verbrennungsgasen zu den Detektoren gefördert wird, anderseits die Vorrichtung zwischen zwei aufeinanderfolgenden Messungen mit einem Gas, i.d.R. Sauerstoff, gespült werden muß. Die Totzeiten zwischen zwei aufeinanderfolgenden Messungen betragen bei den bekannten Vorrichtungen typischerweise zwischen etwa 100 und 180 Sekunden, die Analysezeiten typischerweise zwischen 120 und 140 Sekunden.

Erhöht man den Durchfluß, verkürzen sich die Analysenzeiten radikal (bei Verdoppelung des Durchflusses halbiert sich die Analysezeit in etwa). Allerdings führt eine Erhöhung des Durchflusses zu einer signifikanten Verschleifung des Meßsignals, wodurch die Meßgenauigkeit der Vorrichtung deutlich herabgesetzt wird. Aus diesem Grund erhöht man bei herkömmlichen Vorrichtungen den Durchfluß nicht.

Um die Spritzerbildung zu minimieren, wird als Reaktionsbeschleuniger i.d.R. Wolfram eingesetzt. Das Wolfram koppelt gut an das Hochfrequenzfeld an, schmilzt schnell auf und bindet so das i.d.R. span- oder pulverförmige Probenmaterial. Typischerweise wird einer Probenmenge von etwa 0,5 bis 1 g ca. 1 g Wolfram hinzugefügt.

Allerdings bringt die Verwendung von Wolfram eine ganze Reihe von Nachteilen mit sich. Bei der Verbrennung entsteht ein feines Wolframoxidpulver, das den Verbrennungsofen und die Probenleitung verschmutzt. Daher werden bei den bekannten Vorrichtungen in der Probenleitung i.d.R. mindestens ein Filter für grobe Partikel und ein Filter für feine Partikel angeordnet. Da Wolframoxid gesundheitsschädlich ist, müssen bei der Reinigung des Verbrennungsofens und insbesondere der Ofenkammer und der Filteranordnung sowie beim Be- und Entladen der Ofenkammer besondere Vorsichtsmaßnahmen getroffen werden. Das Wolframoxid muß gesondert entsorgt werden. Zudem ist Wolfram bereits in der Anschaffung teuer.

Als Reaktionsbeschleuniger könnten theoretisch auch leichter handhabbare Stoffe wie insbesondere Reineisen eingesetzt werden. Reineisen koppelt sehr gut an ein Hochfrequenzfeld im Ofen an, ist nicht gesundheitsschädlich und zudem preiswerter als Wolfram. Jedoch spritzen Stoffe wie Reineisen bei Erhitzung deutlich stärker als Wolfram, so dass deutlich mehr und heißere Partikelspritzer entstehen, die sich schneller in die Ofenwand einbrennen, Gasein- und -auslässe zusetzen und schwer zu entfernen sind. Wird die Ofenkammer wie üblich von einem Quarzglasrohr gebildet, verringert sich durch die Verwendung von Reineisen die Standzeit des Quarzglasrohres so stark, dass die Verwendung von Reineisen wirtschaftlich nicht sinnvoll ist.

### OFFENBARUNG DER ERFINDUNG

Der Erfindung liegt die Aufgabe zugrunde, eine Vorrichtung und ein Verfahren zur Verbrennungsanalyse mittels Induktionsöfen anzugeben, die es erlauben, die Standzeiten der Ofenkammer erheblich zu verlängern, die Verbrennung bei höheren Temperaturen durchzuführen und gleichzeitig die Analysezeiten, den Reinigungsaufwand, den Trägergasverbrauch sowie die Totzeiten zwischen zwei aufeinanderfolgenden Messungen drastisch zu reduzieren.

Die Aufgabe wird gelöst von einer Vorrichtung entsprechend dem unabhängigen Anspruch 1 mit einem Induktionsofen mit einer Ofenkammer, in der im Betrieb Trägergas über wenigstens einen Gaseinlass zu einem Gasauslass strömen und in der eine zu analysierende Probe in einem Probenbehälter angeordnet und verbrannt werden kann, wobei ein hohles Schutzelement vorgesehen und im bestimmungsgemäßen Betriebszustand der Vorrichtung in der Ofenkammer unmittelbar über der Probe derart angeordnet ist, dass das der Probe zugewandte Ende des Schutzelementes zusammen mit dem Probenbehälter eine den Trägergasstrom zu der Probe lenkende Verengung bildet, wobei das Schutzelement zur Leitung von bei der Verbrennung der Probe entstehenden Gasen durch das Schutzelement zu dem Gasauslass ausgebildet ist.

Das Schutzelement übernimmt vorteilhaft mehrere Funktionen: es fängt etwaige bei der Verbrennung entstehende Materialspritzer ab und schützt so die Ofenkammer, es fängt die bei der Verbrennung einer Probe entstehenden Gase unmittelbar über der Verbrennungsstelle auf und leitet sie weiter, so dass sie hochkonzentriert zu einem Gasauslass gelangen, und es bildet mit einem Probenbehälter eine Verengung für einen Trägergasstrom, so dass die Probe gezielt angeblasen und auf die bislang übliche Lanze zum Anblasen der Probe verzichtet werden kann. Da heiße Materialspritzer nun nicht mehr problematisch sind, erlaubt das Schutzelement höhere Verbrennungstemperaturen, typischerweise im Bereich von 1.500 °C, und ermöglicht es damit, als Reaktionsbeschleuniger z.B. Reineisen zu verwenden, das in der Handhabung insbesondere unter Gesundheitsaspekten deutlich einfacher und zudem preisgünstiger als Wolfram ist.

Überraschend hat sich gezeigt, dass befriedigende Verbrennungsergebnisse auch dann erzielt werden können, wenn die Probe gerade nicht direkt mit einer Lanze mit Trägergas, in der Regel Sauerstoff, angeblasen wird. Wird auf die Lanze verzichtet, können die Verbrennungsgase direkt über der Verbrennungsstelle aufgefangen werden, so dass die Gase sich nicht erst mit in der Ofenkammer vorhandenem Sauerstoff vermischt und vorteilhaft höher konzentriert zu nachgeordneten Detektoren gelangen, was eine genauere Analyse ermöglicht. Es hat sich gezeigt, dass die Detektoren dann Signale liefern, die um 100 bis 150% stärker sind als bei bekannten Vorrichtungen. Zudem verringern sich die Durchflußzeiten drastisch.

Da die Gaseinlässe nunmehr vor Spritzern geschützt sind, kann das Volumen der Ofenkammer reduziert werden, was unter anderem einen niedrigeren Gasverbrauch bei der Messung und beim Spülen der Kammer bedingt, insbesondere aber auch die Totzeiten zwischen zwei Messungen verringert und daher die Wirtschaftlichkeit der Vorrichtung weiter erhöht. Erste Untersuchungen zeigen, dass mit einer erfindungsgemäßen Vorrichtung die Meß- und Totzeiten um 30 bis 60% gegenüber denjenigen herkömmlichen Vorrichtungen verkürzt werden können.

Das Schutzelement kann vorteilhaft aus einer geeigneten Keramik, insbesondere aus einer siliciumnitridhaltigen Keramik bestehen. Ein Schutzelement, das im Wesentlichen aus Siliciumnitrid besteht, kann bei Bedarf leicht gereinigt werden, da sich Spritzer praktisch nicht einbrennen.

Vorteilhaft ist der Abstand des Probenbehälters zu dem Schutzelement einstellbar. Da es sich bei dem Probenbehälter üblicherweise um einen Tiegel handelt, der auf einem Probenträger positioniert wird, kann der Spalt zwischen oberem Tiegelrand und dem Diffusor so gewählt werden, dass einerseits etwaiges beim Verbrennen der Probe aus dem Tiegel herausspritzendes Material weitestgehend von dem Schutzelement aufgefangen wird und die Ofenkammer nicht verschmutzt, andererseits aber sichergestellt ist, dass genügend Sauerstoff zur Probe in den Tiegel gelangt.

Der Spalt und das Schutzelement bewirken zusammen einen Düsen- oder Kamineffekt, so dass Sauerstoff aus der Ofenkammer gezielt über die zu verbrennende Probe strömt und die entstehenden Verbrennungsgase dann über der Probe abgezogen werden. Dabei sei an dieser Stelle darauf hingewiesen, dass typischerweise die Verbrennungsgase über das Schutzelement nicht aktiv angesaugt werden, dem Gasauslass also keine Ansaugpumpe nachgeschaltet ist, sondern die Gase vielmehr durch einen Überdruck über das Schutzelement aus der Ofenkammer gedrückt werden.

In verfahrensmäßiger Hinsicht wird die Aufgabe gelöst von einem Verfahren zur Verbrennungsanalyse entsprechend dem unabhängigen Anspruch 10, bei welchem eine zu analysierende Probe in einem Probenbehälter in der Ofenkammer eines Induktionsofens, durch die ein Trägergas geleitet wird, angeordnet und verbrannt wird, wobei vor der Verbrennung der Probe ein hohles Schutzelement derart über dem Probenbehälter angeordnet wird, dass das Schutzelement zusammen mit dem Probenbehälter eine den Trägergasstrom zu der Probe lenkende Verengung bildet, wobei die der bei der Verbrennung der Probe entstehenden Gase durch das Schutzelement aus der Ofenkammer geleitet werden.

Vorteilhafte Ausführungsformen der erfindungsgemäßen Vorrichtung bzw. Durchführungsformen des erfindungsgemäßen Verfahrens sind Gegenstand der jeweiligen Unteransprüche.

Weitere Einzelheiten und Vorteile der Erfindung ergeben sich aus der nachfolgenden rein beispielhaften und nicht-beschränkenden Beschreibung von Ausführungsbeispielen in Verbindung mit der Zeichnung.

### KURZE BESCHREIBUNG DER ZEICHNUNG

- Fig. 1: zeigt einen Längsschnitt durch wesentliche Teile einer erfindungsgemäß ausgebildeten Vorrichtung in einer ersten Ausführungsform.
- Fig. 2: zeigt ein Schutzelement im Längschnitt.
- Fig. 3: zeigt stark schematisiert die prinzipielle Anordnung der typischen Komponenten einer erfindungsgemäßen Vorrichtung zur Verbrennungsanalyse.
- Fig. 4: zeigt einen Längsschnitt durch einige wesentliche Teile einer erfindungsgemäß ausgebildeten Vorrichtung in einer zweiten Ausführungsform, bei der eine Reinigungsvorrichtung zur automatischen Reinigung vorgesehen ist, die sich in einer ersten Position befindet.
- Fig. 5: zeigt einen Längsschnitt durch die Vorrichtung gemäß Fig. 4, bei der jedoch die Reinigungsvorrichtung in eine zweite Position gefahren ist.

### BESCHREIBUNG BEVORZUGTER AUSFÜHRUNGSFORMEN

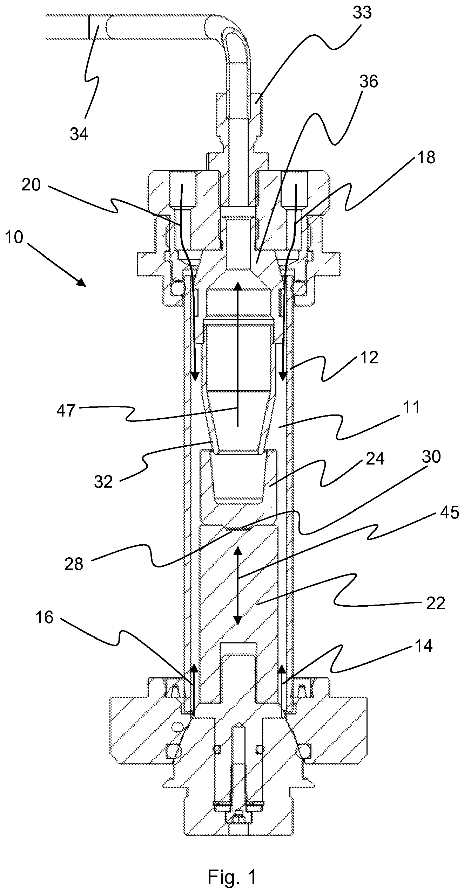

In der Fig. 1 ist eine in ihrer Gesamtheit mit 10 bezeichnete Vorrichtung mit einem Induktionsofen mit einer Ofenkammer 11 zur Verbrennungsanalyse im Längschnitt mit den für das Verständnis der Erfindung wichtigen Teilen dargestellt. Nicht gezeigt sind insbesondere an sich bekannte Mittel zum Erzeugen eines Hochfrequenzfeldes in der Ofenkammer 11, z.B. eines Feldes mit einer Anregungsfrequenz im Bereich von typischerweise etwa 10 MHz bis 30 MHz.

Die Ofenkammer 11 ist bei dem gezeigten Ausführungsbeispiel in einem Quarzglasrohr 12 ausgebildet, in das, wie durch die Pfeile 14, 16, 18 und 20 angedeutet, Gas geleitet werden kann. Quarzglas hat sich für die hier in Frage stehenden Induktionsöfen besonders bewährt, da es für das Hochfrequenzfeld transparent ist und mit sehr präzisen Kanten gefertigt werden kann, so dass die Kammer leicht abgedichtet werden kann. Typische Abmessungen für das Rohr sind z.B. Durchmesser im Bereich von etwa 40 bis 60 mm, Längen zwischen etwa 100 und 200 mm und Wandstärken im Bereich von 1 - 2 mm.

Bei dem durch die Ofenkammer geleiteten Gas handelt es sich typischerweise um Sauerstoff, der sowohl als Verbrennungspartner bei der Verbrennung einer Probe als auch als Trägergas zum Transport der Verbrennungsgase dienen kann. Für besondere Analyseverfahren, z.B. für eine verlangsamte Verbrennung der Probe, können auch andere Gase bzw. Mischungen von Gasen eingesetzt werden.

In der Ofenkammer 11 ist ein verfahrbarer Probenträger 22 vorgesehen, auf dem die zu verbrennende Probe in einem bei dieser Ausführungsform austauschbaren Probenbehälter, nämlich einem Tiegel 24 angeordnet wird, der dann auf den Probenträger gestellt wird. Die Verbrennung der Probe findet dann in dem Tiegel statt, dessen Position in der Ofenkammer durch den Probenträger bestimmt wird. Dazu besitzen bei diesem Ausführungsbeispiel der Probenträger 22 auf seiner dem Tiegel 24 zugewandten Seite eine Vertiefung 28 und der Tiegel 24 auf seiner dem Probenträger 22 zugewandten Seite eine zu der Vertiefung 28 zumindest partiell komplementäre Ausbuchtung 30, so dass der Tiegel 24 leicht auf dem Probenträger positioniert werden kann.

In dem Induktionsofen ist ferner unmittelbar über der hier in dem Tiegel 24 gebildeten Verbrennungsstelle ein Schutzelement 32, hier in Form eines Diffusors, zum Auffangen und Weiterleiten der bei der Verbrennung einer Probe entstehenden Gase vorgesehen, das in einem Gasauslass 33 mündet, an welchem eine Probenleitung 34 angeschlossen ist, über die dann die zu analysierenden Verbrennungsgase zu hier nicht weiter dargestellten, an sich bekannten Detektoren, z.B. Festkörper-Infrarot-Detektoren geleitet werden. Typischerweise sind dies Detektoren, die die Konzentrationen von SO₂ und CO₂ erfassen.

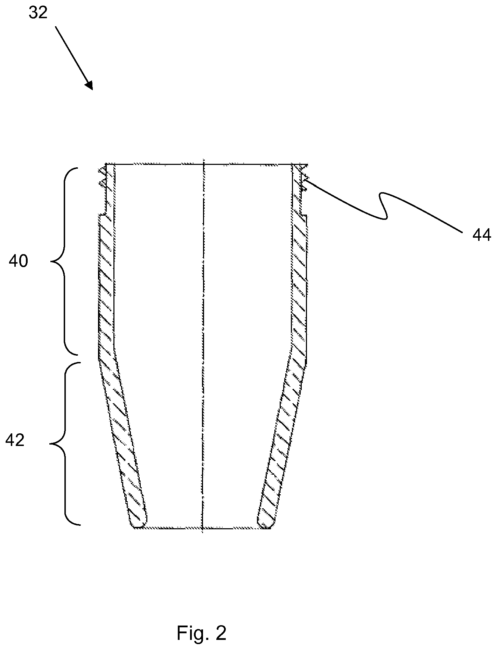

Der Diffusor 32 kann als Einwegdiffusor ausgebildet sein, der nach einer in dem Verbrennungsofen durchgeführten Verbrennungsanalyse entsorgt wird, besteht jedoch vorzugsweise zumindest im Wesentlichen aus Siliciumnitrid, das hitzebeständig und einfach zu reinigen ist, so dass der Diffusor vorteilhaft mehrfach verwendet werden kann. Der Diffusor 32 ist an einem Diffusorträger 36 lösbar befestigt und in Fig. 2 detaillierter dargestellt.

Wie in Fig. 2 gut zu erkennen, umfasst der Diffusor 32 bei diesem Ausführungsbeispiel einen zylindrischen Abschnitt 40 und einen konischen Abschnitt 42. An dem im bestimmungsgemäßen Montagezustand des Diffusors 32 in einer Ofenkammer dem Diffusorträger zugewandten Endabschnitt sind Mittel 44 zum lösbaren Verbinden des Diffusors 32 mit dem Diffusorträger vorgesehen, und zwar im in Fig. 2 dargestellten Beispiel in Form eines Außengewindes, wobei dann der Diffusorträger mit einem entsprechenden Innengewinde versehen ist. Die Befestigung des Diffusors 32 an einem Diffusorträger kann aber auch auf verschiedene andere Weisen erfolgen.

Wie in Fig. 1 gut zu erkennen, ist der äußere Durchmesser des freien Endes des konischen Abschnitts des Diffusors 32 so bemaßt, dass er kleiner ist als der innere Durchmesser eines bei der Verbrennungsanalyse verwendeten Tiegels 24, so dass der Diffusor im bestimmungsgemäßen Betriebszustand etwas in den in den Tiegel 24 hineinragen kann, gleichzeitig aber zwischen dem Außenrand des Diffusors und dem Innenrand der Öffnung des Tiegels ein Spalt verbleibt, über den bei der Verbrennung einer Probe Sauerstoff in den Tiegel gelangen kann.

Probenträger 22 und Diffusor 32 sind vorteilhaft relativ zueinander bewegbar, z.B. dadurch, dass der Probenträger wie durch den Pfeil 45 angedeutet verfahrbar ist. Dies erlaubt es, den Abstand des Diffusors 32 zum Probenträger und damit zu einer auf dem Probenträger angeordneten Probe bzw. einem die Probe enthaltenden Tiegel so einzustellen, dass einerseits beim Verbrennen der Probe entstehende Materialspritzer weitestgehend von dem Diffusor 32 aufgefangen werden, andererseits aber sichergestellt ist, dass genügend Sauerstoff zur Probe gelangt. Die konische Ausgestaltung der Außenseite des zum Tiegel 24 weisenden Abschnitts des Diffusors 32 korrigiert dabei kleinere Positionierfehler des Tiegels 24 auf dem Probenträger 22, wenn er nach dem Positionieren des Tiegel 24 auf dem Probenträger 22 in den Tiegel hineingefahren wird. Nach einer Messung kann der Probenträger dann zum Zwecke der leichten Entnahme des Tiegels wieder von dem Diffusor 32 weg bewegt werden.

Da etwaige beim Verbrennen einer Probe auftretende Spritzer, sofern sie nicht im Tiegel 24 verbleiben, weitestgehend von dem Diffusor 32 aufgefangen werden, vereinfacht sich die Reinigung der Ofenkammer erheblich. Wird Wolfram als Reaktionsbeschleuniger verwendet, findet sich praktisch kein gesundheitsgefährdendes Wolframoxid mehr auf den Innenwänden der Ofenkammer. Da Spritzer aber generell nicht mehr problematisch sind, kann vorteilhaft auch Reineisen als Reaktionsbeschleuniger eingesetzt werden, das nicht nur preiswerter als Wolfram ist, sondern bei der Verbrennung auch Eisenoxid bildet, das wesentlich leichter in der Handhabung ist als Wolframoxid.

Der Verbrennungsofen 10 ist so ausgestaltet, dass im Betrieb des Verbrennungsofens 10 entstehende Verbrennungsgase sowie in den Ofen wie oben beschrieben eingeleitete Gase nur über den Gasauslass 33 entweichen können, wie durch den Pfeil 47 angedeutet. Da der Diffusor verhindert, das beim Verbrennen einer Probe auftretende Materialspritzer die Gaseinlässe verstopfen, können diese Einlässe näher an der Probe angeordnet und das Volumen der Ofenkammer 11 reduziert werden. Ein geringeres Volumen bedeutet aber auch, dass weniger Gas zum Spülen des Ofens zwischen zwei Messungen eingesetzt werden muß und die Totzeit zwischen zwei aufeinanderfolgenden Messungen verkürzt werden kann.

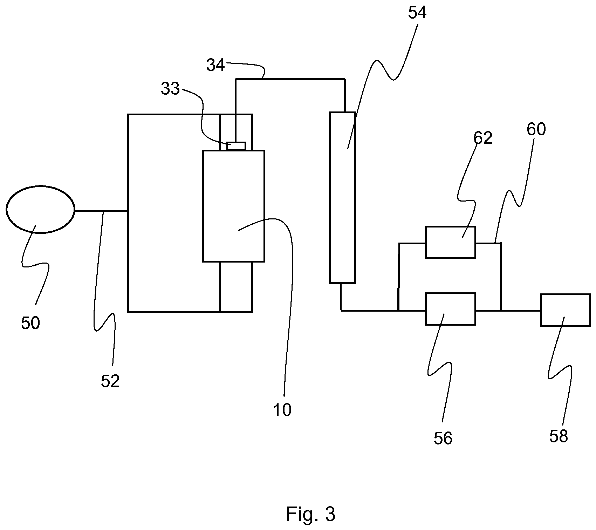

In der Fig. 3 ist stark schematisiert die prinzipielle Anordnung der typischen Komponenten einer erfindungsgemäßen Vorrichtung zur Verbrennungsanalyse gezeigt. Eine Trägergasquelle 50, i.d.R. in Form einer Sauerstoffflasche, ist über eine entsprechende Leitung 52 mit den Gaseinlässen des Induktionsofens 10 verbunden. Dabei kann das Verhältnis der von oben zu den von unten in den Induktionsofen eingeleiteten Gasen einstellbar sein.

An den Gasauslass 33 des Induktionsofens 10 ist eine Probenleitung 34 angeschlossen, in die Partikelfilter 54 eingebunden. Dem Filter 54 nachgeschaltet ist ein Druckregler 56, mittels welchem die Flußrate der Gase in der Probenleitung bei einer Messung so eingestellt werden kann, dass dem Druckregler 56 nachgeordnete Detektoren 58, von denen hier nur einer beispielhaft gezeigt ist, optimal betrieben werden können.

Bei dem dargestellten Ausführungsbeispiel kann der Druckregler 56 beim Spülen der Anordnung vorteilhaft über eine Bypaßleitung 62 überbrückt werden, die mittels eines Bypaßventils 64 geöffnet und geschlossen werden kann. Dies erlaubt es, die Anordnung mit einer hohen Flußrate zwischen zwei Messungen zu spülen, ohne dazu die kalibrierte Einstellung des Druckreglers 56 verändern zu müssen. Typische Flußraten bei Messungen liegen detektorabhängig z.B. im Bereich von etwa 3 bis 4 Litern pro Minute, während beim Spülen durch Öffnen des Bypaßventils 64 Flußraten zwischen etwa 8 und 10 Litern pro Minute eingestellt werden können, was die Spül- und damit die Totzeit zwischen zwei aufeinanderfolgenden Messungen verkürzt.

Bei der erfindungsgemäßen Vorrichtung kann das bislang übliche kontinuierliche Durchströmen der Vorrichtung mit Trägergas im sog. Standby-Betrieb entfallen. Die Vorrichtung wird erst kurz vor einer Messung mit Trägergas gespült. Da zudem das gesamte gasdurchströmte Volumen bei der erfindungsgemäßen Vorrichtung gegenüber bekannten Vorrichtungen stark reduziert werden kann, haben sich bei ersten Tests mit erfindungsgemäßen Vorrichtungen erhebliche Einsparungen im Gasverbrauch ergeben.

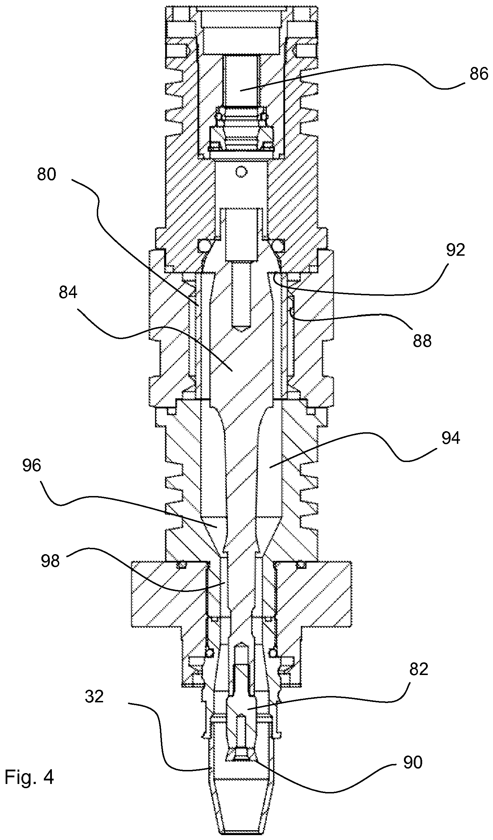

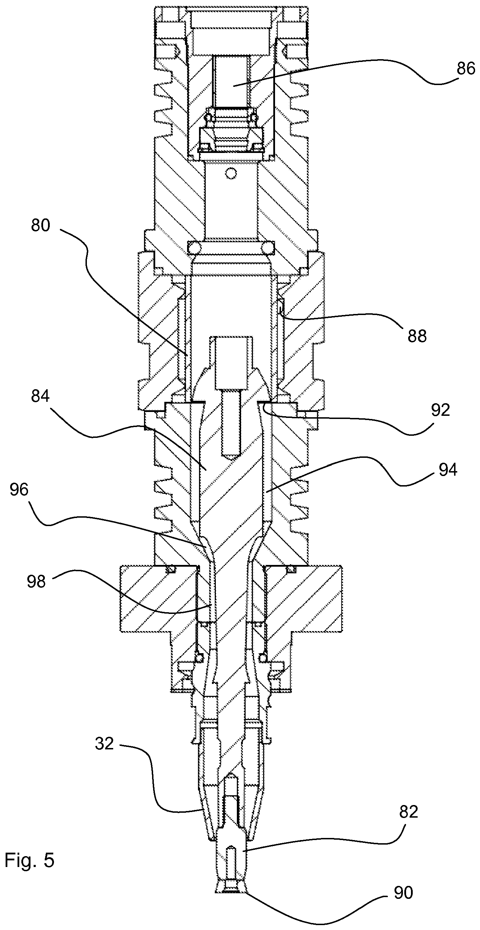

In den Fig. 4 und 5 sind Details einer zweiten Ausführungsform einer erfindungsgemäßen Vorrichtung gezeigt, wobei aus Gründen der Übersichtlichkeit auf die Darstellung der bereits im Zusammenhang mit den Fig. 1 bis 3 beschriebenen Teile, insbesondere der Ofenkammer und des Probenbehälters, verzichtet wurde. Gezeigt sind ein erfindungsgemäßer Diffusor 32, ein Partikelfilter 80 und Mittel zum automatischen Reinigen des Diffusors 32 und des Filters 80, wobei diese Mittel bei diesem Ausführungsbeispiel einen Stößel 82 zur Reinigung des Diffusors, einen Stößel 84 zur Reinigung des Filters und Mittel zum Bewegen der Stößel, hier beispielsweise in ein Form einer Hydraulik- oder Pneumatikeinheit 86 umfassen.

In der Fig. 4 sind die Stößel in einer ersten Position, der sogenannten Ruheposition gezeigt, in welcher sie den Weg der Verbrennungsgase zu einem Gasauslass 88 freigeben, so dass bei der Verbrennung einer Probe im hier nicht gezeigten Ofenrohr entstehende Gase über den Diffusor 32 durch den hier zylindrischen Partikelfilter 80 zu dem Gasauslass 88 gelangen können. Bei dem Filter 80 handelt es sich vorzugsweise um einen Sintermetallfilter, der etwaige Feststoffe in dem Verbrennungsgas ausfiltert.

In der Fig. 5 sind die Stößel in einer zweiten Position gezeigt, in welcher sie am Ende eines Reinigungsvorgangs durch den Diffusor 32 (Stößel 82) bzw. durch den Filter 80 (Stößel 84) gefahren sind.

Der Stößel 82 ist bei diesem Ausführungsbeispiel lösbar mit dem Stößel 84 verbunden, so dass der Stößel 82 bei Bedarf leicht ausgetauscht werden kann. Jeder Stößel 82 und 84 besitzt einen an die jeweils zu reinigenden Teile angepassten umlaufenden Vorsprung 90 bzw. 92, der zum Abschaben etwaiger Verunreinigungen an der Innenseite der dem Probenträger zugewandten Mündung des Diffusors 32 bzw. an der Innseite des Partikelfilters 80 dient.

Zwischen Filter 80 und Diffusor 32 ist eine Expansionskammer 94 vorgesehen, die über einen konischen Abschnitt 96 in einer Verbindungskammer 98 zwischen Expansionskammer und Diffusor 32 mündet. Durch diese Ausgestaltung mit konischem Abschnitt 96 ist vorteilhaft sichergestellt, dass beim Abschaben des Filters 80 abfallende Partikel in den Diffusor 32 und über den dann als Trichter wirkenden Diffusor 32 in den hier nicht dargestellten Tiegel, in dem die Probe verbrannt wurde, fallen, wenn die Reinigung durchgeführt wird, solange der Tiegel noch untergestellt ist. Da die Tiegel in der Regel Einwegtiegel sind, können sie nach der Verbrennung und Reinigung vorteilhaft einfach entsorgt werden.

Im Rahmen des Erfindungsgedankens sind zahlreiche Abwandlungen und Weiterbildungen möglich, die sich zum Beispiel auf für den Anwender vorteilhafte Zusatzmodule beziehen. So können Mittel zur Messung der Flußrate eines über den Gasauslass aus dem Verbrennungsofen geleiteten Gases vorgesehen sein, die zum Beispiel in der Probenleitung angeordnet sind und bei Unterschreitung eines vorgebbaren Minimalwertes, was auf eine Verstopfung in der Leitung hindeutet, ein Alarmsignal erzeugen.

Vorteilhaft kann auch eine Steuer- und Auswerteeinheit vorgesehen sein, die mit Mitteln zur Messung des Drucks des in den Induktionsofen eingeleiteten Trägergases gekoppelt und dazu ausgebildet ist, bei Überschreitung eines vorgegebenen Maximaldrucks ein Alarmsignal zu erzeugen, um zu verhindern, dass die Ofenkammer bei einer Messung undicht wird und Gase unkontrolliert die Kammer verlassen. Das Alarmsignal kann dabei auch dazu verwendet werden, die Trägergaszufuhr automatisch zu unterbrechen.

Des Weiteren kann z.B. mittels eines Differenzdrucksensors der Differenzdruck der dem Induktionsofen zugeleiteten und der aus dem Ofen abgeleiteten Gase gemessen werden. Der Differenzdruck kann dann mit einem vorgegebenen Grenzwert verglichen werden, um bei Überschreiten des Grenzwertes auf eine Störung, insbesondere eine Verschmutzung/Verstopfung schließen und eine entsprechende Alarmmeldung erzeugen zu können.

Das Schutzelement kann auch bei für eine Umrüstung geeigneten bestehenden Induktionsöfen zur Verbrennungsanalyse nachgerüstet werden, wobei das Schutzelement dann die in solchen Öfen üblicherweise über der Verbrennungsstelle vorgesehene Lanze zum Zuführen von Sauerstoff ersetzt und mit dem bisher mit der Lanze gekoppelten Gaseinlass verbunden wird. Dieser ehemalige Gaseinlass wird an die Probenleitung angeschlossen und zum Gasauslass. Der ehemalige Gasauslass kann verschlossen oder zu einem zusätzlichen Gaseinlass umfunktioniert werden. Bei einem solchermaßen nachgerüsteten Induktionsofen ist dann zwar noch nicht das Volumen der Ofenkammer reduziert, jedoch ist die Reinigung wesentlich vereinfacht und die Verwendung von Eisen als Reaktionsbeschleuniger möglich.

## Patentansprüche

1. Vorrichtung zur Verbrennungsanalyse, umfassend einen Induktionsofen (10) mit einer Ofenkammer (11), in der im Betrieb Trägergas über wenigstens einen Gaseinlass zu einem Gasauslass (33; 88) strömen und in der eine zu analysierende Probe in einem Probenbehälter (24) angeordnet und verbrannt werden kann,
wobei ein hohles Schutzelement (32) vorgesehen und im bestimmungsgemäßen Betriebszustand der Vorrichtung in der Ofenkammer (11) unmittelbar über der Probe angeordnet ist,
**dadurch gekennzeichnet,**
**dass** das der Probe zugewandte Ende des Schutzelementes (32) zusammen mit dem Probenbehälter eine den Trägergasstrom zu der Probe lenkende Verengung bildet, wobei das Schutzelement zur Leitung von bei der Verbrennung der Probe entstehenden Gasen durch das Schutzelement zu dem Gasauslass (33; 88) ausgebildet ist.

2. Vorrichtung nach Anspruch 1, **dadurch gekennzeichnet, dass** das hohle Schutzelement als Diffusor (32) ausgebildet ist.

3. Vorrichtung nach Anspruch 1 oder 2, **dadurch gekennzeichnet, dass** das hohle Schutzelement (32) zumindest im Wesentlichen aus Siliciumnitrid besteht.

4. Vorrichtung nach einem der Ansprüche 1 bis 3, **dadurch gekennzeichnet, dass** Mittel zum Einstellen des Abstands des Probenbehälters (24) zu dem hohlen Schutzelement (32) vorgesehen sind.

5. Vorrichtung nach einem der Ansprüche 1 bis 4, **dadurch gekennzeichnet, dass** Mittel zur Messung der Flussrate eines über den Gasauslass (33) geleiteten Gases vorgesehen sind.

6. Vorrichtung nach einem der Ansprüche 1 bis 5, **dadurch gekennzeichnet, dass** eine Steuer- und Auswerteeinheit vorgesehen ist, die mit Mitteln zur Messung des Drucks des in die Ofenkammer eingeleiteten Trägergases gekoppelt und dazu ausgebildet ist, bei Überschreitung eines vorgegebenen Maximaldrucks ein Alarmsignal zu erzeugen.

7. Vorrichtung nach einem der Ansprüche 1 bis 6, **dadurch gekennzeichnet, dass** in einer dem Gasauslass (33) nachgeordneten Leitung ein Druckregler (56) und eine den Druckregler überbrückende Bypassleitung (62) mit einem Bypassventil (64) angeordnet sind.

8. Vorrichtung nach einem der Ansprüche 1 bis 7, **dadurch gekennzeichnet, dass** Mittel (82, 84, 86) zum automatischen Reinigen zumindest des hohlen Schutzelements (32) vorgesehen sind.

9. Vorrichtung nach Anspruch 8, **dadurch gekennzeichnet, dass** die Mittel (82, 84, 86) zum automatischen Reinigen zumindest des hohlen Schutzelements (32) einen Stößel (82; 84) mit einem Schabevorsprung (90; 92) umfassen.

10. Verfahren zur Verbrennungsanalyse, wobei eine zu analysierende Probe in einem Probenbehälter in der Ofenkammer eines Induktionsofens, durch die ein Trägergas geleitet wird, angeordnet und verbrannt wird,
**dadurch gekennzeichnet,**
**dass** vor der Verbrennung der Probe ein hohles Schutzelement derart über dem Probenbehälter angeordnet wird, dass das Schutzelement zusammen mit dem Probenbehälter eine den Trägergasstrom zu der Probe lenkende Verengung bildet, wobei die der bei der Verbrennung der Probe entstehenden Gase durch das Schutzelement aus der Ofenkammer geleitet werden.

11. Verfahren nach Anspruch 10, **dadurch gekennzeichnet, dass** der Abstand des Probenbehälters zu dem hohlen Schutzelement eingestellt wird.

12. Verfahren nach einem der Ansprüche 10 oder 11, **dadurch gekennzeichnet, dass** die Flussrate eines über einen Gasauslass aus der Ofenkammer geleiteten Gases gemessen und bei Unterschreitung eines vorgebbaren Minimalwertes ein Alarmsignal erzeugt wird.

13. Verfahren nach einem der Ansprüche 10 bis 12, **dadurch gekennzeichnet, dass** der Druck des in die Ofenkammer eingeleiteten Trägergases gemessen und bei Überschreitung eines vorgegebenen Maximaldrucks ein Alarmsignal erzeugt wird.

14. Verfahren nach einem der Ansprüche 10 bis 13, **dadurch gekennzeichnet, dass** nach einem Verbrennungsvorgang eine Reinigungsvorrichtung durch das hohle Schutzelement gefahren wird, die Verunreinigungen von dem Schutzelement ablöst, während der Probenbehälter in der Ofenkammer verbleibt und zum Auffangen abgelöster Verunreinigungen dient.

15. Verfahren nach einem der Ansprüche 10 bis 14, **dadurch gekennzeichnet, dass** der Differenzdruck der dem Induktionsofen zugeleiteten und der aus dem Ofen abgeleiteten Gase gemessen und mit einem vorgegebenen Grenzwert verglichen wird, wobei bei Überschreiten des Grenzwertes ein auf eine Störung, insbesondere eine Verschmutzung/Verstopfung hinweisende Alarmmeldung erzeugt wird.

## Claims

1. A device for combustion analysis, comprising an induction furnace (10) with a furnace chamber (11), in which carrier gas can flow during operation via at least one gas inlet to a gas outlet (33; 88), and in which a sample to be analyzed can be arranged and burned in a sample container (24),
wherein a hollow protective element (32) is provided and is in the intended state of operation of the device arranged in the furnace chamber (11) directly above the sample,
**characterized in**
**that** the end of the protective element (32) facing towards the sample forms, together with the sample container, a constriction that guides the carrier gas flow to the sample, wherein the protective element is designed for guiding gases produced during the combustion of the sample through the protective element towards the gas outlet (33; 88).

2. The device according to Claim 1, **characterized in that** the hollow protective element is formed as a diffusor (32).

3. The device according to Claim 1 or 2, **characterized in that** the hollow protective element (32) consists at least substantially of silicon nitride.

4. The device according to one of Claims 1 to 3, **characterized in that** means for adjusting the distance of the sample container (24) to the hollow protective element (32) are provided.

5. The device according to one of Claims 1 to 4, **characterized in that** means for measuring the flow rate of a gas guided through the gas outlet (33) are provided.

6. The device according to one of Claims 1 to 5, **characterized in that** a control and evaluation unit is provided, which is coupled to means for measuring the pressure of the carrier gas introduced into the furnace chamber and is designed to generate an alarm signal, when a predefined maximum pressure is exceeded.

7. The device according to one of Claims 1 to 6, **characterized in that** a pressure controller (56) and a bypass line (52) bypassing the pressure controller and comprising a bypass valve (54) are arranged in a line downstream of the gas outlet (33).

8. The device according to one of Claims 1 to 7, **characterized in that** means (82, 84, 86) for automatically cleaning at least the hollow protective element (32) are provided.

9. The device according to Claim 8, **characterized in that** the means (82, 84, 86) for automatically cleaning at least the hollow protective element (32) comprise a ram (82; 84) with a scraping protrusion (90; 92).

10. A method for combustion analysis, wherein a sample to be analyzed is arranged and burned in a sample container in the furnace chamber of an induction furnace, through which a carrier gas is guided,
**characterized in that**,
before the combustion of the sample, a hollow protective element is arranged above the sample container in such a way that the protective element, together with the sample container, forms a constriction that guides the carrier gas flow to the sample, wherein the gases produced during the combustion of the sample are guided from the furnace chamber through the protective element.

11. The method according to Claim 10, **characterized in that** the distance of the sample container to the hollow protective element is adjusted.

12. The method according to one of Claims 10 or 11, **characterized in that** the flow rate of a gas guided out of the furnace chamber via a gas outlet is measured and, if the flow rate falls below a predefinable minimum value, an alarm signal is generated.

13. The method according to one of Claims 10 to 12, **characterized in that** the pressure of the carrier gas introduced into the furnace chamber is measured and, if a predefinable maximum pressure is exceeded, an alarm signal is generated.

14. The method according to one of Claims 10 to 13, **characterized in that**, after a combustion process, a cleaning device is moved through the hollow protective element, which detaches contaminations from the protective element, whilst the sample container remains in the furnace chamber and is used to collect detached contaminations.

15. The method according to one of Claims 10 to 14, **characterized in that** the differential pressure of the gases fed to the induction furnace and of the gases discharged from the furnace is measured and is compared with a predefined limit value, wherein, if the limit value is exceeded, an alarm signal indicating a malfunction, in particular a contamination/blockage, is generated.

## Revendications

1. Dispositif d'analyse de combustion, comprenant un four à induction (10) ayant une chambre de four (11) dans laquelle, en fonctionnement, du gaz porteur peut s'écouler par au moins une entrée de gaz vers une sortie de gaz (33, 88) et dans laquelle un échantillon à analyser peut être disposé dans un récipient à échantillon (24) et peut être brûlé,
dans lequel un élément de protection creux (32) est prévu et est disposé, à l'état de fonctionnement prévu du dispositif, directement au-dessus de l'échantillon dans la chambre de four (11),
**caractérisé en ce**
**que** l'extrémité de l'élément de protection (32) laquelle montre en direction de l'échantillon forme conjointement avec le récipient à échantillon un étranglement qui dirige le flux de gaz porteur vers l'échantillon, dans lequel l'élément de protection est conçu pour conduire des gaz produits lors de la combustion de l'échantillon, à travers l'élément de protection vers la sortie de gaz (33; 88).

2. Dispositif selon la revendication 1, **caractérisé en ce que** l'élément de protection creux est réalisé en tant que diffuseur (32).

3. Dispositif selon la revendication 1 ou 2, **caractérisé en ce que** l'élément de protection creux (32) est constitué, au moins pour l'essentiel, de nitrure de silicium.

4. Dispositif selon l'une quelconque des revendications 1 à 3, **caractérisé en ce que** des moyens de réglage de la distance séparant le récipient à échantillon (24) de l'élément de protection creux (32) sont prévus.

5. Dispositif selon l'une quelconque des revendications 1 à 4, **caractérisé en ce que** des moyens de mesure du débit d'un gaz guidé via la sortie de gaz (33) sont prévus.

6. Dispositif selon l'une quelconque des revendications 1 à 5, **caractérisé en ce qu'**une unité de commande et d'évaluation est prévue qui est couplée à des moyens de mesure de la pression du gaz porteur introduit dans la chambre de four et qui est conçue pour générer un signal d'alarme lorsqu'une pression maximale prédéterminée est dépassée.

7. Dispositif selon l'une quelconque des revendications 1 à 6, **caractérisé en ce qu'**un régulateur de pression (56) ainsi qu'une conduite de dérivation (62) ayant une soupape de dérivation (64) et pontant ledit régulateur de pression sont agencés dans une conduite située en aval de la sortie de gaz (33).

8. Dispositif selon l'une quelconque des revendications 1 à 7, **caractérisé en ce que** des moyens (82, 84, 86) destinés à nettoyer automatiquement au moins ledit élément de protection creux (32) sont prévus.

9. Dispositif selon la revendication 8, **caractérisé en ce que** les moyens (82, 84, 86) destinés à nettoyer automatiquement au moins ledit élément de protection creux (32) comprennent un poussoir (82, 84) ayant une saillie à racler (90, 92).

10. Procédé d'analyse de combustion, dans lequel un échantillon à analyser est disposé dans un récipient à échantillon dans la chambre de four d'un four à induction, qui est traversée par un gaz porteur, et est brûlé,
**caractérisé en ce**
**que**, avant la combustion de l'échantillon, un élément de protection creux est disposé au-dessus du récipient à échantillon de telle sorte que l'élément de protection forme conjointement avec le récipient à échantillon un étranglement qui dirige le flux de gaz porteur vers l'échantillon, dans lequel les gaz produits lors de la combustion de l'échantillon sont guidés hors de la chambre de four à travers ledit élément de protection.

11. Procédé selon la revendication 10, **caractérisé en ce que** la distance séparant le récipient à échantillon de l'élément de protection creux est réglée.

12. Procédé selon l'une quelconque des revendications 10 ou 11, **caractérisé en ce que** le débit d'un gaz guidé via une sortie de gaz hors de la chambre de four est mesuré et qu'un signal d'alarme est généré lorsqu'une valeur minimale prédéterminable n'est pas atteinte.

13. Procédé selon l'une quelconque des revendications 10 à 12, **caractérisé en ce que** la pression du gaz porteur introduit dans la chambre de four est mesurée et qu'un signal d'alarme est généré lorsqu'une pression maximale prédéterminée est dépassée.

14. Procédé selon l'une quelconque des revendications 10 à 13, **caractérisé en ce que**, après une opération de combustion, on fait passer un dispositif de nettoyage à travers l'élément de protection creux, qui détache des impuretés de l'élément de protection, tandis que le récipient à échantillon reste dans la chambre de four, et sert à recueillir des impuretés détachées.

15. Procédé selon l'une quelconque des revendications 10 à 14, **caractérisé en ce que** la pression différentielle des gaz amenés au four à induction et évacués du four est mesurée et est comparée à une valeur limite prédéterminée, dans lequel, lorsque la valeur limite est dépassée, un message d'alarme signalant un défaut, en particulier une pollution/obstruction est généré.
